Europäisches Patentamt

European Patent Office

Office européen des brevets

(11) Numéro de publication : **0 359 656 B1**

(12) **FASCICULE DE BREVET EUROPEEN**

(45) Date de publication du fascicule du brevet :
23.12.92 Bulletin 92/52

(51) Int. Cl.⁵ : **F28F 9/02, F16L 37/00**

(21) Numéro de dépôt : **89402490.0**

(22) Date de dépôt : **12.09.89**

(54) **Dispositif de raccord rapide pour une boîte à fluide dans un échangeur de chaleur.**

(30) Priorité : **16.09.88 FR 8812149**

(43) Date de publication de la demande :
**21.03.90 Bulletin 90/12**

(45) Mention de la délivrance du brevet :
**23.12.92 Bulletin 92/52**

(84) Etats contractants désignés :
**DE ES GB IT SE**

(56) Documents cités :
**WO-A-86/05567**
**DE-A- 2 502 291**
**FR-A- 2 370 252**
**US-A- 4 520 867**

(73) Titulaire : **VALEO THERMIQUE MOTEUR**
**8, rue Louis-Lormand La Verrière**
**F-78320 Le Mesnil-Saint-Denis (FR)**
Titulaire : **HUTCHINSON**
**124, avenue des Champs Elysées**
**F-75008 Paris (FR)**

(72) Inventeur : **Potier, Michel**
**9, square des Carrières**
**F-78120 Rambouillet (FR)**
Inventeur : **Briet, Gilles**
**Le Petit Vallot Neuvy Grandchamp**
**F-78130 Geugnon (FR)**

(74) Mandataire : **Netter, André et al**
**Cabinet NETTER, 40, rue Vignon**
**F-75009 Paris (FR)**

## Description

L'invention concerne un ensemble selon le préambule de la revendication 1.

Un tel ensemble est décrit dans FR-A-2 579 308. Il est destiné à un échangeur de chaleur, notamment pour véhicule automobile, comportant un faisceau de tubes formé soit par des tubes en U reliant l'une à l'autre les deux chambres de la boîte à fluide, soit par des tubes droits divisés en deux groupes qui relient respectivement les deux chambres à une seconde boîte à fluide située à l'opposé de la première. Ce dispositif de raccord rapide remplace les dispositifs classiques comportant un embout d'entrée et un embout de sortie faisant saillie en deux endroits éloignés de la boîte à fluide, et sur lesquels on enfile par des opérations séparées des tuyaux souples ou durites.

Dans cet ensemble connu, la cloison est disposée entièrement selon la direction longitudinale de la boîte à fluide, qu'elle divise par conséquent en des chambres disposées latéralement. Or on souhaite fréquemment diviser la boîte à fluide en des chambres juxtaposées longitudinalement par une cloison s'étendant au moins en partie transversalement.

Le but de l'invention est d'adapter l'ensemble connu à une telle disposition.

Ce but est atteint selon l'invention en ce qu'à ladite portion plane longitudinale de la cloison se raccorde au moins une portion transversale de celle-ci de façon à diviser la boîte à fluide longitudinalement.

D'autres avantages de l'invention ressortiront de la description détaillée donnée ci-après de quelques exemples de réalisation, et des dessins annexés dans lesquels :

- la figure 1 est une vue en coupe d'un ensemble selon l'invention, montrant partiellement l'échangeur de chaleur auquel il est associé, prise transversalement à la boîte à fluide selon la ligne I-I de la figure 2;
- la figure 2 est une vue en coupe selon la ligne II-II de la figure 3;
- la figure 3 est une vue en coupe selon la ligne III-III de la figure 2;
- la figure 4 est une vue partielle en élévation selon la figure 2;
- la figure 5 est une vue analogue à la figure 1, prise selon la ligne V-V de la figure 6, relative à un second exemple de réalisation;
- la figure 6 est une vue analogue à la figure 2, prise selon la ligne VI-VI de la figure 7;
- la figure 7 est une vue en coupe du seul organe de raccord, prise selon la ligne VII-VII de la figure 6;
- la figure 8 est une vue partielle en perspective, partiellement arrachée, de la boîte à fluide représentée aux figures 5 et 6;
- la figure 9 est une vue partielle et schématique, en coupe selon la ligne IX-IX de la figure 10, de l'échangeur de chaleur dans un troisième exemple de réalisation de l'invention;
- la figure 10 est une vue en élévation partielle et schématique de l'échangeur de la figure 9; et
- la figure 11 est une vue partielle schématique, en coupe selon la ligne XI-XI de la figure 9, montrant l'échangeur et l'organe de raccord prêt à y être monté.

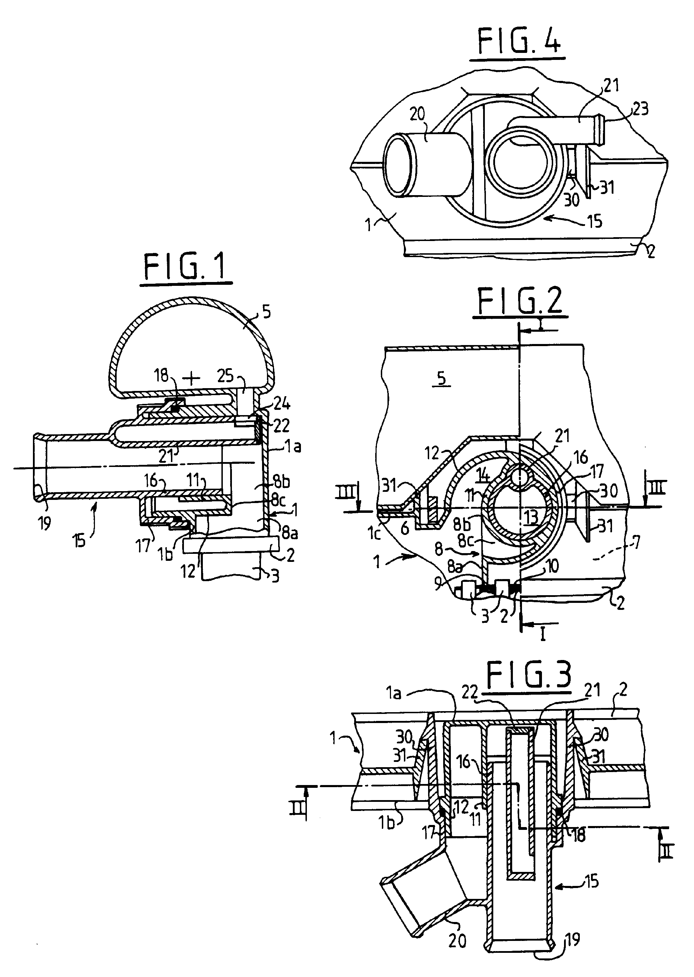

Dans la description qui suit, les termes haut, bas, avant et arrière se réfèrent aux éléments tels que vus aux figures 2, 4, 6 et 10, dans lesquelles la boîte à fluide est située au-dessus du faisceau de tubes de l'échangeur de chaleur, ces tubes s'étendant verticalement, et le raccordement s'effectue par un mouvement d'avant en arrière de l'organe de raccord.

Les figures 1 à 4 illustrent partiellement un échangeur de chaleur de véhicule automobile comprenant une boîte à fluide supérieure 1 associée à un collecteur 2 traversé par les extrémités supérieures des tubes 3 d'un faisceau composé de tubes orientés verticalement et s'étendant chacun sensiblement sur toute la largeur de la boîte à fluide 1. Les tubes 3 communiquent par leur extrémité inférieure avec une boîte à fluide inférieure (non représentée). La boîte à fluide est divisée intérieurement en deux chambres 6 et 7 par une cloison 8 s'étendant transversalement. La cloison 8, moulée d'une seule pièce avec la boîte à fluide, présente un bord inférieur rectiligne 9 s'étendant transversalement sur toute la largeur de la boîte à fluide et se raccordant aux parois longitudinales arrière 1a et avant 1b de celle-ci. Le bord 9 s'appuie sur le collecteur 2, entre deux tubes 3 consécutifs, par l'intermédiaire d'un joint d'étanchéité constitué par une feuille d'élastomère 10 qui assure également l'étanchéité des traversées des tubes.

La cloison 8 comprend une portion 8a comprise dans un plan vertical transversal à la boîte à fluide et s'étendant sur toute la largeur de celle-ci, jusqu'à une certaine hauteur à partir du bord 9 où elle rencontre la partie inférieure de la tubulure 12 qui sera décrite plus loin. Au-delà commence une portion 8b, située dans le même plan, qui s'étend verticalement jusqu'à la rencontre de la tubulure 11, également décrite plus loin, et horizontalement de la paroi arrière 1a au plan vertical longitudinal contenant une troisième portion 8c de la cloison, à laquelle elle se raccorde. La portion 8c s'étend vers la droite de la figure 2 à partir du plan des portions 8a et 8b, entre les tubulures 11 et 12 auxquelles elle se raccorde.

Le dispositif de raccord selon l'invention comprend une tubulure interne 11 et une tubulure externe 12, formées d'une seule pièce avec la boîte à fluide et orientées d'arrière en avant. A leur extrémité libre tournée vers l'avant, la surface interne de la tubulure interne 11 et la surface externe de la tubulure externe 12 ont des sections circulaires, le premier de ces cercles étant intérieur au second. La tubulure interne 11 définit en son intérieur un passage de fluide intérieur 13 communiquant avec la chambre 7, et les deux tubulures définissent entre elles un passage 14 extérieur à la tubulure 11, communiquant avec la chambre 6. Le passage 14 n'entoure pas complètement la tubulure 11, les deux tubulures se raccordant entre elles selon une génératrice du côté droit de la figure 2. La tubulure 12 a une section entièrement circulaire depuis son extrémité libre jusqu'à la paroi avant 1b de la boîte à fluide. Au-delà de cette paroi, elle s'interrompt sur une partie de sa circonférence entre la paroi supérieure 1c de la boîte à fluide et le plan des portions 8a et 8b de la cloison, à gauche de ce dernier. Au-delà du plan de la portion 8c de la cloison, la tubulure s'interrompt sur une partie supplémentaire de sa circonférence, à droite du plan 8a, 8b et jusqu'à sa jonction avec la tubulure 11. Sur la partie restante de son extension circonférentielle, qui correspond sensiblement à la moitié supérieure de la circonférence totale, la tubulure 12 se prolonge jusqu'à la paroi latérale arrière de la boîte à fluide qui ferme l'extrémité de la tubulure.

A partir de son extrémité libre, la tubulure 11 se poursuit sur toute sa circonférence jusqu'au plan de la portion de cloison 8c. Au-delà, seule la moitié supérieure de cette tubulure se prolonge jusqu'à la paroi latérale arrière de la boîte à fluide, à laquelle elle se raccorde de façon étanche. Dans cette région, la tubulure 11 est sensiblement tangente à la portion 8b de la cloison.

Le dispositif de raccord rapide illustré comprend un organe de raccord 15 qui présente, à son extrémité tournée vers la boîte à fluide, une tubulure interne 16 et une tubulure externe 17 dimensionnées et disposées de façon à s'emmancher respectivement à l'intérieur de la tubulure interne 11 et à l'extérieur de la tubulure externe 12 de la boîte à fluide. Un joint d'étanchéité 18 est interposé entre les tubulures 12 et 17. La tubulure 16 se prolonge sous forme cylindrique sur toute la longueur de l'organe 15 jusqu'à une extrémité ouverte 19 destinée à recevoir un tuyau souple. La tubulure 17 communique, à l'opposé de la boîte à fluide, avec une tubulure 20 d'axe oblique et de même diamètre que la tubulure 16, pour le raccordement à un autre tuyau souple.

La tubulure 16 est interrompue, à la partie supérieure de son périmètre et sur une partie de sa longueur à partir de l'extrémité tournée vers la boîte à fluide, par une troisième tubulure 21 de plus petit diamètre, appartenant également à l'organe de raccord monobloc 15. La tubulure 21 se prolonge au-delà de l'extrémité de la tubulure 16 à l'intérieur de la boîte à fluide, où son extrémité est fermée par un bouchon 22 fixé de manière inamovible. A l'extérieur de la boîte à fluide, la tubulure 21 est repliée à angle droit dans un plan parallèle au plan des axes des tubulures 16 et 20, c'est-à-dire dans un plan horizontal, et est ouverte à son extrémité libre 23 pour être raccordée à un tuyau souple. La tubulure 21 est destinée à raccorder un circuit de dégazage au vase d'expansion 5. Elle pénètre dans un évidement ménagé à cet effet dans la tubulure interne 11 de la boîte à fluide, et présente au voisinage du bouchon 22 une ouverture latérale 24 par laquelle elle communique avec un alésage vertical 25 ménagé dans la pièce qui forme la boîte à fluide et le vase d'expansion et débouchant d'une part à l'intérieur de ce dernier et d'autre part dans l'évidement de la tubulure 11.

L'organe de raccord 15 présente des pattes élastiques 30 coopérant avec des nervures 31 de la pièce formant la boîte à fluide et le vase d'expansion pour le verrouillage mutuel des deux pièces.

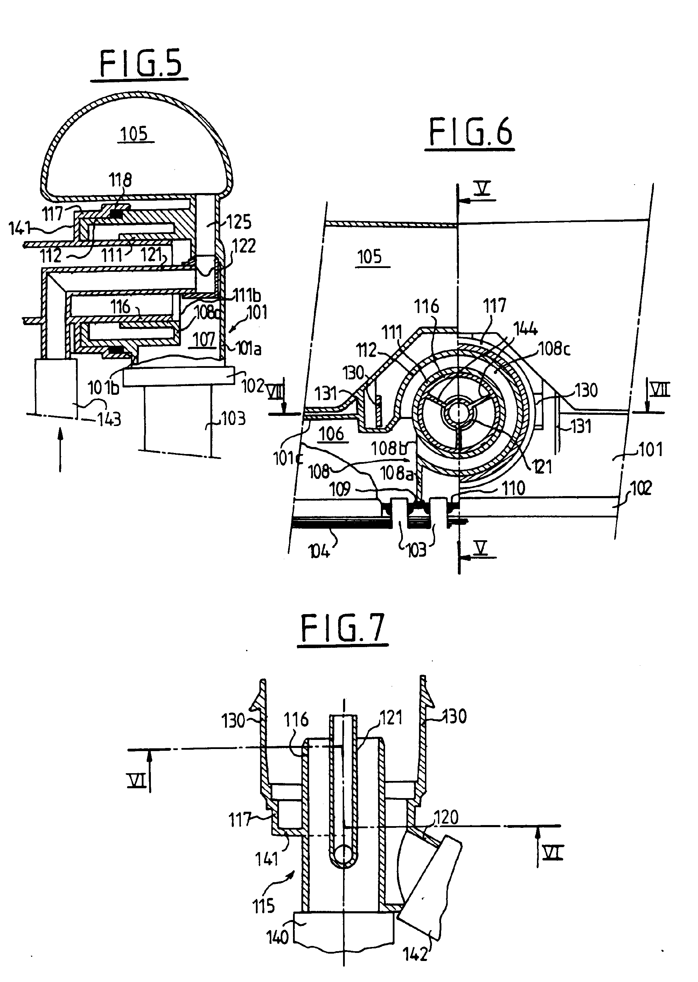

On voit aux figures 5 et 6 une boîte à fluide 101, un collecteur 102, un faisceau de tubes 103, un vase d'expansion 105 semblables aux éléments correspondants des figures 1 à 3.

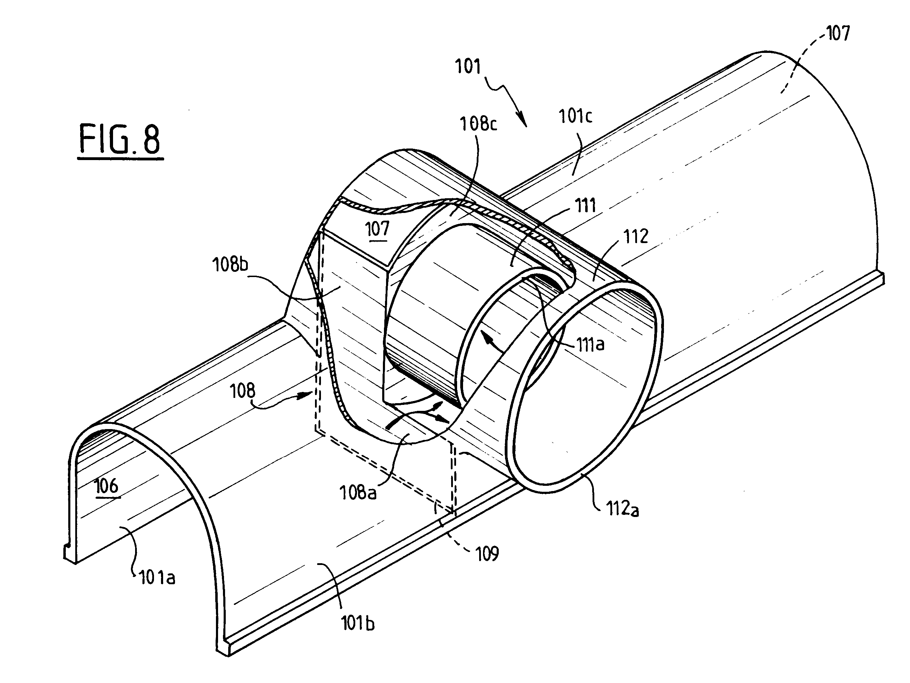

La boîte à fluide 101 est divisée intérieurement en deux chambres 106 et 107 par une cloison 108 formée d'une seule pièce avec elle et dont la forme ressort particulièrement de la figure 8. La cloison 108 présente un bord libre inférieur rectiligne 109 s'étendant transversalement de la paroi latérale arrière 101a à la paroi latérale avant 101b de la boîte à fluide. Le bord 109 coopère de façon étanche avec le collecteur 102 dans les mêmes conditions que le bord 9 de la cloison 8 avec le collecteur 2. Une portion plane 108a de la cloison 108 s'étend perpendiculairement au plan du collecteur 102, sur toute la largeur de la boîte à fluide et sur une partie de la hauteur de celle-ci. Cette portion 108a est suivie d'une autre portion 108b située dans le même plan et s'étendant sur une partie de la largeur de la boîte à fluide à partir de sa paroi arrière 101a, et jusqu'à la paroi supérieure 101c de la boîte à fluide, formée à ce niveau par la partie supérieure d'une tubulure 112 formée d'une seule pièce avec la boîte à fluide, orientée horizontalement et transversalement à la direction longitudinale de cette dernière. La tubulure 112 est ouverte à son extrémité avant 112a.

Une autre tubulure 111, de forme complètement cylindrique, est formée d'une seule pièce avec la boîte à fluide. Cette tubulure est logée à l'intérieur de la tubulure 112, coaxialement à celle-ci. Elle est également ouverte à son extrémité 111a tournée vers l'avant et est sensiblement tangente à la portion 108b de la cloison.

La cloison 108 comporte une portion 108c s'étendant dans un plan longitudinal, vertical et perpendiculaire au plan des portions 108a et 108b. Cette portion 108c se raccorde à la portion 108b, à la tubulure 112 et à la tubulure 111 par l'extrémité arrière de celle-ci. Elle limite vers l'arrière, à droite du plan des portions 108a et 108b, l'espace annulaire compris entre les tubulures 111 et 112, qui communique avec la chambre 106, tandis que la chambre 107 se prolonge en arrière de la portion 108c et communique avec l'espace intérieur de la tubulure 111.

Le dispositif de raccord des figures 5 à 7 comprend un organe de raccord monobloc 115, représenté seul à la figure 7, destiné à coopérer avec les tubulures 111 et 112 pour relier les chambres 106 et 107 à un circuit de fluide extérieur. L'organe 115 présente, du côté tourné vers la boîte à fluide, deux tubulures coaxiales 116 et 117 ouvertes à leur extrémité, qui s'emmanchent respectivement à l'intérieur de la tubulure 111 et à l'extérieur de la tubulure 112, la tubulure 116 s'étendant au-delà de l'extrémité de la tubulure 117. La tubulure 116 a une forme sensiblement cylindrique sur toute la longueur de l'élément de raccord et reçoit à son extrémité arrière un tuyau souple 140, fixé par des moyens non représentés, pour le raccordement au circuit extérieur. L'espace annulaire défini par les tubulures 116 et 117 est limité vers l'arrière, sur la majeure partie de sa circonférence, par une portion de paroi 141 et communique, sur la partie restante de sa circonférence, avec une tubulure cylindrique 120 dont l'axe est oblique par rapport à celui des tubulures 116 et 117, et qui reçoit un tuyau souple 142. Une troisième tubulure 121, coaxiale et intérieure aux tubulures 116 et 117, est également ouverte à son extrémité arrière, en saillie par rapport à celle de la tubulure 116. A l'avant, la tubulure 121 forme un coude à 90°, traverse la tubulure 116 et se termine à l'extérieur de celle-ci et en avant de la paroi 141, pour recevoir un tuyau souple 143. La tubulure 121 est tenue, dans sa partie coaxiale à la tubulure 116, par des ailettes radiales 144 qui la relient à cette dernière. Une pièce en forme de coude 122, collée ou soudée à la boîte à fluide, vient coiffer l'extrémité arrière ouverte de la tubulure 121 et assure la communication entre l'intérieur de la tubulure et le vase d'expansion 105 par l'intermédiaire d'un alésage 125 analogue à l'alésage 25 du dispositif des figures 1 à 4. La tubulure 121 sert à relier au vase d'expansion 105 un circuit de dégazage dont fait partie le tuyau souple 143.

Un joint d'étanchéité 118, des languettes élastiques 130 et des nervures 131 jouent les mêmes rôles respectivement que les éléments 18, 30 et 31 des figures 1 à 4.

En outre, il peut être prévu de disposer des joints d'étanchéité entre les tubulures 111 et 116 ainsi qu'entre la tubulure 121 et la pièce 122.

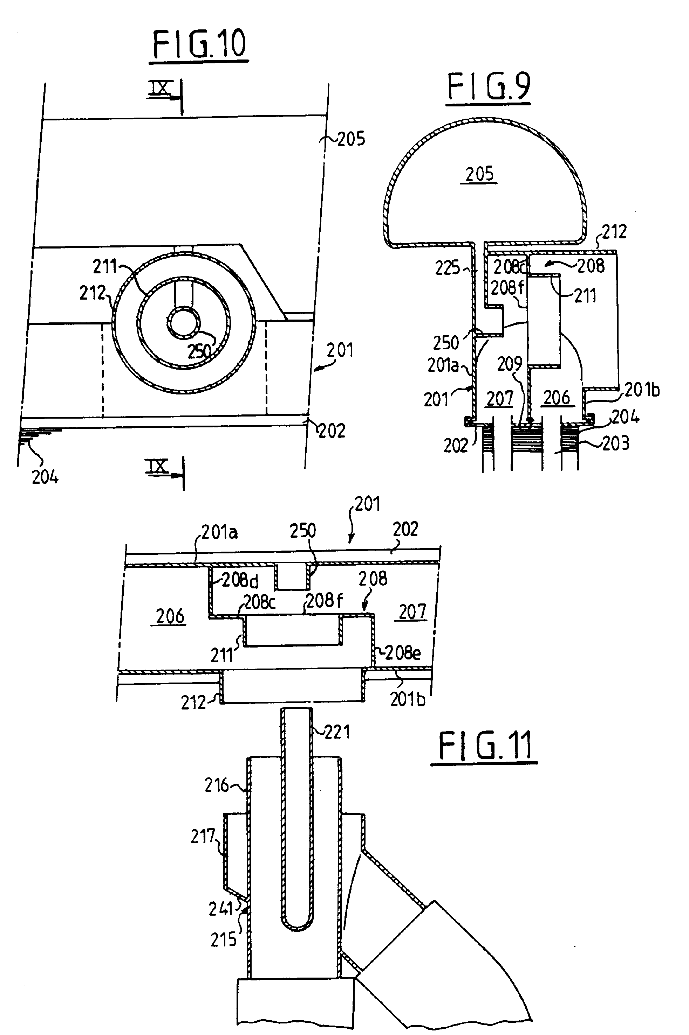

On a représenté schématiquement aux figures 9 à 11 une boîte à fluide 201 semblable par sa forme extérieure à la boîte à fluide 101 décrite ci-dessus, formée d'une seule pièce avec un vase d'expansion 205 semblable au vase 105. La boîte à fluide 201 est associée à un collecteur 202 et à un faisceau de tubes 203 muni d'ailettes 204. Contrairement aux réalisations précédemment décrites, le faisceau de tubes est formé de deux rangées de tubes, juxtaposées dans la largeur de la boîte à fluide. Le nombre de rangées pourrait également être supérieur à deux.

L'intérieur de la boîte à fluide est séparé en deux chambres 206 et 207 par une cloison 208 dont le bord inférieur 209 coopère de façon étanche avec le collecteur 202. Comme on le voit à la figure 11, la section de la cloison 208 par un plan horizontal a une forme en S, cette cloison étant composée de trois portions planes verticales perpendiculaires entre elles et s'étendant chacune du bord 209 à la paroi supérieure de la boîte à fluide à laquelle elles se raccordent. Une portion 208c est orientée selon la direction longitudinale de la boîte à fluide et passe entre les deux rangées de tubes 203. Une seconde portion 208d, perpendiculaire à la précédente, relie une des extrémités longitudinales de celle-ci à la paroi arrière 201a de la boîte à fluide. Enfin la troisième portion 208e, parallèle à la portion 208d, s'étend entre l'extrémité opposée de la portion 208c et la paroi avant 201b de la boîte à fluide. La portion de cloison 208c présente une ouverture circulaire 208f au bord de laquelle se raccorde une tubulure cylindrique 211 s'étendant vers l'avant à partir de la portion 208c et ouverte à son extrémité avant. Une tubulure 212, coaxiale et extérieure à la tubulure 211, et également ouverte à son extrémité avant, se raccorde dans sa partie inférieure à la paroi avant 201b de la boîte à fluide et forme dans sa partie supérieure une surélévation de la paroi supérieure de la boîte à fluide, s'étendant jusqu'à la paroi arrière 201a à laquelle elle se raccorde. L'intérieur de la tubulure 212 communique avec la chambre 206, qui s'étend au-delà de la portion 208d de la cloison et en avant de la portion 208c, tandis que l'intérieur de la tubulure 211 communique avec la chambre 207, qui s'étend au-delà de la portion 208e et en arrière de la portion 208c. Un alésage vertical 225, semblable aux alésages 25 et 125 précédemment décrits, débouche à sa partie supérieure dans le vase d'expansion 205 et communique à sa partie inférieure avec une tubulure 250, coaxiale aux tubulures 211 et 212 et de plus petit diamètre que celles-ci. La tubulure 250 s'étend à partir de la paroi arrière 201a de la boîte à fluide et s'ouvre à son extrémité avant à l'intérieur de la boîte à fluide.

L'organe de raccord 215 illustré à la figure 11 est sensiblement identique à l'organe de raccord 115 de la figure 7. Les tubulures 216 et 217 et une tubulure 221 analogue à la tubulure 121 coopèrent respectivement avec les tubulures 211, 212 et 250 de la boîte à fluide pour relier les chambres 207 et 206 à un circuit extérieur et le vase d'expansion 205 à un circuit de dégazage.

Le dispositif de raccord rapide des figures 9 à 11, en raison de la portion de cloison 208c orientée longitudinalement et adjacente au collecteur, ne peut être utilisé avec une seule rangée de tubes et nécessite au moins deux rangées de tubes. En revanche les dispositifs selon les figures 1 à 8 peuvent être utilisés indifféremment avec une seule rangée de tubes ou avec au moins deux rangées de tubes. Pour le reste, les différentes versions du dispositif présentent les mêmes caractéristiques de facilité et de rapidité de raccordement.

## Revendications

1. Ensemble composé

- d'une boîte à fluide pour un échangeur de chaleur comprenant une chambre d'entrée de fluide et une chambre de sortie de fluide (6,7) séparées l'une de l'autre par une cloison (8) présentant un bord libre (9), la boîte à fluide comportant deux tubulures, à savoir une tubulure interne (11) et une tubulure externe (12) entourant sensiblement la tubulure interne, définissant deux passages respectivement intérieur et extérieur à la tubulure interne, qui communiquent respectivement avec les deux chambres, la tubulure interne se raccordant directement à une portion plane (8c) de la cloison s'étendant dans la direction longitudinale de la boîte à fluide, et

- d'un organe de raccord monobloc (15) muni de deux tubulures (16,17) propres à coopérer respectivement avec les tubulures interne et externe de la boîte à fluide,

caractérisé en ce qu'à ladite portion plane longitudinale de la cloison se raccorde au moins une portion transversale (8a,8b) de celle-ci de façon à diviser la boîte à fluide longitudinalement.

2. Ensemble selon la revendication 1, caractérisé en ce que la boîte à fluide et l'organe de raccord présentent des moyens (30,31) de verrouillage mutuel en position de raccordement.

3. Ensemble selon l'une des revendications 1 et 2, caractérisé en ce que la tubulure externe se raccorde directement à la paroi extérieure de la boîte à fluide.

4. Ensemble selon l'une des revendications précédentes, caractérisé en ce que ladite portion transversale (8a,8b) de la cloison est plane et comporte ledit bord libre (9), qu'elle s'étend sur toute la largeur de la boîte à fluide entre ledit bord libre et la tubulure externe, puis sur une fraction de cette largeur, d'une paroi latérale à la portion longitudinale (8c) de la cloison, au-delà de la tubulure externe.

5. Ensemble selon la revendication 4, caractérisé en ce que la portion transversale (8a,8b) de la cloison s'étend en hauteur du bord libre (9) à la tubulure interne (11), et que le passage extérieur n'entoure que partiellement cette dernière.

6. Ensemble selon la revendication 4, caractérisé en ce que la portion transversale (108a,108b) de la cloison s'étend en hauteur du bord libre (109) à la paroi extérieure de la boîte à fluide, et que le passage extérieur entoure totalement la tubulure interne (111).

7. Ensemble selon l'une des revendications 4 à 6, caractérisé en ce que la portion transversale de la cloison est sensiblement tangente à la tubulure interne.

8. Ensemble selon l'une des revendications 1 à 3, caractérisé en ce qu'à la portion longitudinale (208c) de la cloison se raccordent deux portions transversales (208d, 208e) reliant respectivement ses deux extrémités longitudinales aux deux parois latérales (201a,201b) de la boîte à fluide (201).

9. Ensemble selon l'une des revendications précédentes, caractérisé en ce que l'organe de raccord comprend une tubulure de dégazage (21) faisant saillie au-delà des extrémités des tubulures interne et externe (11,12) tournées vers la boîte à fluide (1).

10. Ensemble selon la revendication 9, caractérisé en ce que la tubulure de dégazage communique, à l'intérieur de la boîte à fluide, avec une conduite de liaison (25) pour un vase d'expansion séparée des deux chambres de la boîte à fluide.

## Claims

1. An assembly comprising:

- a fluid manifold for a heat exchanger comprising a fluid inlet chamber and a fluid outlet chamber (6, 7) separated from each other by a bulkhead (8) having a free edge (9), the fluid manifold comprising two tube portions, namely an inner tube portion (11) and an outer tube portion (12) substantially surrounding the inner tube portion, defining two passages which are respectively internal and external to the inner tube portion, and which communicate respectively with the two chambers, the inner tube portion being joined directly to a flat portion (8c) of the bulkhead extending in the longitudinal direction of the fluid manifold, and

- an integral connecting portion (15) which is provided with two tube portions (16, 17) adapted to cooperate respectively with the inner and outer tube portions of the fluid manifold,

characterised in that at least one transverse portion (8a, 8b) of the bulkhead is joined to the said longitudinal flat portion of the latter so as to divide the fluid manifold longitudinally.

2. An assembly according to Claim 1, characterised in that the fluid manifold and the connecting portion define means (30, 31) for locking them together in the connected position.

3. An assembly according to Claim 1 or Claim 2, characterised in that the outer tube portion is joined directly to the outer wall of the fluid manifold.

4. An assembly according to one of the preceding Claims, characterised in that the said transverse portion (8a, 8b) of the bulkhead is flat and includes the said free edge (9), and that it extends over the whole width of the fluid manifold between the said free edge and the outer tube portion, and then over a fraction of the said width beyond the outer tube portion, from a lateral wall to the longitudinal portion (8c) of the bulkhead.

5. An assembly according to Claim 4, characterised in that the transverse portion (8a, 8b) of the bulkhead extends in height from the free edge (9) to the inner tube portion (11), and that the outer passage only partially surrounds the latter.

6. An assembly according to Claim 4, characterised in that the transverse portion (108a, 108b) of the bulkhead extends in height from the free edge (109) to the outer wall of the fluid manifold, and that the outer passage totally surrounds the inner tube portion (111).

7. An assembly according to one of Claims 4 to 6, characterised in that the transverse portion of the bulkhead is substantially tangential to the inner tube portion.

8. An assembly according to one of Claims 1 to 3, characterised in that the longitudinal portion (208c) of the bulkhead is joined to two transverse portions (208d, 208e) which respectively join its two longitudinal extremities to the two lateral walls (201a, 201b) of the fluid manifold (201).

9. An assembly according to one of the preceding Claims, characterised in that the connecting portion includes a degassing tube portion (21) projecting beyond the ends of the inner and outer tube portions (11, 12) directed towards the fluid manifold (1).

10. An assembly according to Claim 9, characterised in that the de-gassing tube portion communicates, within the fluid manifold, with a connecting duct (25) for an expansion chamber separate from the two chambers of the fluid manifold.

**Patentansprüche**

1. Einheit, bestehend
   - aus einer Endkammer für einen Wärmetauscher, enthaltend eine Einlaufkammer und eine Auslaufkammer für das Medium (6, 7), die voneinander durch eine Trennwand (8) getrennt sind, welche eine freie Kante (9) aufweist, wobei die Endkammer zwei Stutzen besitzt, nämlich einen Innenstutzen (11) und einen Außenstutzen (12), die den Innenstutzen im wesentlichen umschließen, zur Begrenzung eines Innen- bzw. eines Außendurchtritts am Innenstutzen, die jeweils mit den beiden Kammern in Verbindung stehen, wobei der Innenstutzen direkt mit einem flachen Teil (8c) der Trennwand verbunden ist, die sich in Längsrichtung der Endkammer erstreckt, und
   - aus einem einteiligen Verbindungsorgan (15), versehen mit zwei Stutzen (16, 17), die dazu geeignet sind, jeweils mit dem Innen- bzw. Außenstutzen der Endkammer zusammenzuwirken,
   **dadurch gekennzeichnet,** daß der genannte flache Längsteil der Trennwand wenigstens mit einem Querteil (8a, 8b) verbunden ist, so daß die Endkammer in Längsrichtung unterteilt wird.

2. Einheit nach Anspruch 1, **dadurch gekennzeichnet,** daß die Endkammer und das Verbindungsorgan Mittel (30, 31) zur gegenseitigen Verriegelung in Verbindungsposition aufweisen.

3. Einheit nach einem der Ansprüche 1 und 2, **dadurch gekennzeichnet,** daß der Außenstutzen direkt mit der Außenwand der Endkammer verbunden ist.

4. Einheit nach einem der vorherigen Ansprüche, **dadurch gekennzeichnet,** daß der genannte Querteil (8a, 8b) der Trennwand flach ist und die genannte freie Kante (9) aufweist, welche sich über die gesamte Breite der Endkammer zwischen der genannten freien Kante und dem Außenstutzen erstreckt, weiterhin über einen Teil dieser Breite, von einer Seitenwand zum Längsteil (8c) der Trennwand, jenseits des Außenstutzens.

5. Einheit nach Anspruch 4, **dadurch gekennzeichnet,** daß der Querteil (8a, 8b) der Trennwand sich in Höhe der freien Kante (9) bis zum Innenstutzen (12) erstreckt und daß der Außendurchtritt letzteren nur teilweise umschließt.

6.  Einheit nach Anspruch 4, **dadurch gekennzeichnet,** daß der Querteil (108a, 108b) der Trennwand sich in Höhe der freien Kante (109) bis zur Außenwand der Endkammer erstreckt und daß der Außendurchtritt den Innenstutzen (111) vollständig umschließt.

7.  Einheit nach einem der Ansprüche 4 bis 6, **dadurch gekennzeichnet,** daß der Querteil der Trennwand im wesentlichen tangential zum Innenstutzen verläuft.

8.  Einheit nach einem der Ansprüche 1 bis 3, **dadurch gekennzeichnet,** daß der Längsteil (208c) der Trennwand mit zwei Querteilen (208d, 208e) verbunden ist, die mit den beiden Längsenden jeweils an die beiden Seitenwände (201a, 201b) der Endkammer (201) anschließen.

9.  Einheit nach einem der vorherigen Ansprüche, **dadurch gekennzeichnet,** daß das Verbin-dungsorgan einen Entgasungsstutzen (21) ent-hält, der an den Enden des Innen- und des Außenstutzens (11, 12), die der Endkammer (1) zugewandt sind, übersteht.

10. Einheit nach Anspruch 9, **dadurch gekennzeichnet,** daß der Entgasungsstutzen im Innern der Endkammer mit einer Verbindungsleitung (25) für ein von den beiden Kammern der End-kammer getrenntes Ausdehnungsgefäß kommu-niziert.

FIG.4

FIG.1

FIG.2

FIG.3

## FIG.5

## FIG.6

## FIG.7

FIG.8

EP 0 359 656 B1

## FIG.10

## FIG.9

## FIG.11